# EUROPEAN PATENT APPLICATION

(11) **EP 2 287 734 A1**
(43) Date of publication of application: **23.02.2011**
(21) Application number: 09167943.1
(22) Date of filing: 14.08.2009
(51) Int. Cl.: G06F 9/46, G06F 13/42, H04L 29/06, H04L 29/08

(54) **System and method for performing a transaction**

(71) Applicant: ST-Ericsson SA, 1228 Plan-les-Ouates (CH)
(72) Inventor: Radulecsu, Andrei, 5655 AK Eindhoven (NL)
(74) Representative: Bird, William Edward

(57) **Abstract**

A method and system is disclosed to perform transactions in a reliable manner even in the case where an in-order network that serves for communication between devices implementing the method is unreliable due to the fact, that a low latency network is used, which for instance restricts the number of retransmissions.

The basic concept of the method and the system according to the present invention is to use a 4-way handshake to discriminate between a resent message which is caused by a corresponding network or component failure or between a message that is intended to initiate a new transaction.

Under certain circumstances when a single server and a single client communicate with each other and under the prerequisite that sequence numbers are used to keep track of respective messages the third and fourth type of message can be replaced by a subsequent first type of message to initiate a new transaction. However, generally the client may only initiate a new transaction once it has received a fourth type of message from the server which indicates to it that the server has completed the transaction on its side.

## Description

The present invention relates to a system, devices and method for performing a transaction, based on a message exchange in a network environment, which provides an in-order and potentially lossy data delivery.

### Technical Background

Due to cost pressure in designing modern systems there is a tendency to use standardized components. In order to integrate such standardized components in a seamless manner it is required that they are able to communicate with each other without any problems. Thus components of different manufacturers that are used to build up a system need to conform to various requirements starting with their communication inter alia. In order to be able to adapt different components to each other as well as to allow customers to select the components for their needs different manufacturers often form a group or alliance to define certain standards for components and interconnects as well as interfaces of target systems and applications. Such an alliance is the Mobile Industry Processor Interface alliance (MIPI^{®}). At present 150 manufacturers form part of this alliance. However, technical details of the standard are mostly kept confidential within the members of the alliance. From time to time certain information gets published and is for instance available under http://www.mipi.org/ on the WorldWideWeb.

There is a steady trend of increased processing and memory capacities which goes along with requirements for higher communication bandwidth. In order to allow for flawless communication at the required speed, often high speed serial interfaces like USB or USB2 are used. Another possibility is to use the UniPro^{SM} interconnect standard which is defined by the MIPI alliance and defines a high speed serial link to connect for instance chips in a mobile device, such as a mobile phone or a personal digital assistant. In the present stage UniPro^{SM} is released in the standard 1.0. Some related details are made available under http://en.wikipedia.org/wiki/unipro on the WorldWideWeb. UniPro^{SM} is in particular intended to allow designers and developers of future mobile devices to mix components of various manufacturers according to their system requirements suitable for different functions no matter by which vendor they are provided in order to have a maximum flexibility to design new devices and which at the same time are able to form a device without creating problems related to the interconnection of the components or the communication amongst each other. In particular the UniPro^{SM} standard - or Unified Protocol is aimed at chip-to-chip networks using high speed serial links. It is intended to be a general purpose communication protocol that solves the general interconnect problems, such as error handling, flow control, routing or arbitration. For such networks generally two types of communication services are conceivable: A connection-less (CL) service and a connection-oriented (CO) service. In this category the connection-oriented communication requires previous to the communication that the connections are set up in order to allocate the resources required for a secured communication. The connection-oriented service has the advantage, that none of the buffers or respective components taking part in the communication overflows or underflows. Another connection category is the connection-less service which has the advantage that compared to the connection-oriented service it is faster as it does not require a setup of the connection. On the other hand, however, even using an in-order, reliable network this type of service may loose data at the edges of the network due to the circumstances that components which are involved in the communication are not under communication control and thereby a buffer may overflow or run empty which on the other hand leads to data losses. In particular in mobile devices setting up components or configuring certain applications requires that the communication needs to be quick and reliable at the same time. In case of the Unified Protocol an example of a suitable application may be for instance the configuration protocol which here is required for discovery and enumeration.

A connection-less service can also be provided in the form of transactions. Some transactions may be performed by way of configuration transactions in which one node sends a command in form of a SET or a GET of an attribute and another node processing the command returns a response in form of a success/failure message and accompanied by an attribute value for instance.

In some cases due to the number of components involved in communication and due to a required low latency in the network a service type respectively traffic class of the Unified Protocol may be used, which restricts the number of retransmissions. One such traffic class is TC2 which is currently under discussion. In case TC2 is used, a service on top of the network routines continues to transmit data in order, however, it may become unreliable, unless special measures are taken. An unreliable transaction mechanism however conflicts with some requirements of applications which are built on top of the Unified Protocol. Such an application would be for instance the configuration protocol which mandates reliability.

Reliable transactions in the context of network environments have been discussed previously. For instance, TCP extensions have been proposed to merge a connection setup request from a client to a server and response from a server to a client data transmission and a connection tear down in a single 3-way handshake. Such a construct is based on the concept of an unreliable network. It however also relies on a large sequence number space (32 bits) which increases the respective packet overhead, and requires a maximum segment lifetime MSL which in the case of TCP mandates 120 seconds and thus limits the number of transactions per unit time. These kinds of requirements make T/TCP however unpractical to be used in the Unified Protocol. More related information can be found in the document T/TCP-TCP Extensions for Transaction Functional Specification, by R. Braden, IETF Request for Comments #1644, July 1994.

### Summary of the invention

It is an object of the invention to provide a system and method for performing a transaction.

This object is achieved for a method according to claim 1 and for a system according to claim 15. Advantageous further developments of the invention are defined in the dependent claims.

An advantage of the present invention is that the method can be performed reliably and at the same time requires a low overhead even in a case where the underlying network is unreliable or a respective application is slow and which does not put constraints on a segment lifetime, provided that the network delivers data in order.

The method according to present invention demonstrates the particular advantage, that also in a case where the number of retransmissions in the network is restricted a transaction can be completed in a reliable manner in that a fourth type of message is sent by a server to inform the client, that the transaction has been completed. By this procedure a situation can be avoided, where the client starts initiating a new transaction in a case, where a previous transaction has been lost due to a network restriction and that the server believes, that the new transaction relates to a repetition of the previous transaction.

Beneficially according to a further embodiment of the present invention a second first type of message is discarded at the server while the original of the first type of message is still maintained. Such a procedure allows for fast communication and avoids double processing of incoming messages at the server side.

Advantageously according to a further embodiment of the present invention in a case where a second type of message is not received within a predefined time period at the server the client resends the first type of message and thus ensures by this processing that in a case where a component on the server side is not capable of processing the first type of message this message automatically will be resent by following up on the expiration of the time period.

Expediently according to a further embodiment of the method according to the present invention measuring the predefined time period is executed upon starting a timer. As timers are standardized components and often used in integrated circuits they are cheap to be provided and at the same time reliable means for controlling a communication protocol. Preferably in order to exactly control the communication flow each a first type of message is sent a respective timer is started.

Advantageously according to a further embodiment of the method according to the present invention the communication can be even tighter controlled once the timer is stopped each time a second type of message is received and thus the overall communication efficiency is increased.

In a particular advantageous manner a further embodiment of the method according to the present invention allows it to filter duplicate first type of messages and thus further improves the communication flow and increases the efficiency in discarding the second first type of message while maintaining the originator.

Expediently in a further embodiment of the method according to the present invention this method is capable of dealing with two first type of messages that are sent in sequence in handling them by using respectively associated unique identifiers.

Expediently a further embodiment of the method according to the present invention allows it to keep a tight control on communication in that only a subsequent first type of message is allowed to be sent by the client once the server has completed the previous transaction and communicated this by sending a fourth type of message associated to the respective unique identifier of the previous transaction. In this case particular control can be taken of the problem, that a certain service type or traffic class in the underlying network may allow for a restricted number of transactions and thus associated transaction messages can get lost.

According to an advantageous embodiment of the method according to the present invention as a unique identifier a sequence number counting the number of messages is used. Such an identifier can easy be added to the respective message and requires no large overhead while at the same time being unique and easily identifiable by respective communication partners.

Beneficially according to a further embodiment of the method according to present invention it is possible to further speed up the communication by omitting certain messages under certain circumstances under the control of sequence numbers. By this sequence number the server can identify a further transaction coming from the same client and thus instead of sending a third and fourth type of message can immediately deal with the second first type of message which allows for faster transaction and quicker transaction processing.

Expediently a further embodiment of the method according to the present invention allows it to use standardized message types that are acknowledged by the unified protocol. Thus development of respective communication routines is further facilitated.

In a particular advantageous manner a further embodiment of the method according to the present invention allows it to communicate messages by the Unified Protocol and thus allows it to adapt the method according to the present invention to a standardized procedure opening access to all of the component manufacturers that follow this standard.

Advantageously the system according to the present invention can be implemented by using a minimum configuration of only two chips that are interconnected by a reliable network even in a case where this reliable network offers a traffic class that only allows for a limited number of retransmissions, wherein one of the components acts as a client and implements the parts of the method of the present invention of the client and whereas the second component acts as the server and implements the respective method steps of a method according to the present invention associated to the server.

In an advantageous manner a further embodiment of the system according to the present invention can be used in combination with a network providing in-order data delivery and having a restricted number of retransmissions as the number of messages exchanged according to the present invention ensures that the transaction can be completed no matter how unreliable the underlying network is.

Beneficially according to a further embodiment of the present invention this system is implemented as a mobile device having a processor and a memory and does not requiring a large share of computing capacity to handle the communication between the devices involved and allows for faster communication inside the mobile device.

Below examples and embodiments of the present invention are further explained by use of examples in drawings.

### Brief Description of the drawings

Fig. 1 shows a way of performing a transaction based on a 3-way handshake having certain disadvantages,
Fig. 2 depicts problems occurring with different messages having no sequence numbers,
Fig. 3 explains the situation where different servers are involved in communication,
Fig. 4 explains a communication flow according to an embodiment of the present invention,
Fig. 5 and Fig. 6 explain an embodiment of a state machine associated to a client according to the present invention,
Fig. 7 and Fig. 8 depict an embodiment of a state machine of an embodiment of a server according to the present invention,
Fig. 9 explains a way of speeding up the communication between a client and a server, and
Fig. 10 depicts a minimum configuration of an embodiment of a system according to the present invention.

### Detailed description of the present invention

Preferred embodiments of the present invention will now be described in detail with reference to the annexed drawings. In the following description, a detailed description of known functions and configurations incorporated herein has been omitted for conciseness.

Although, the present invention will be described with respect to particular embodiments and with reference to certain drawings, the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. Similarly, it is to be noticed that the term "connected", also used in the claims, should not be interpreted as being restricted to direct connections only, although "connected" includes a direct connection which may be advantageous. The term "coupling" should also be interpreted as not being limited to direct connections. Reference throughout this specification to "one embodiment" or "an embodiment" means that a particular feature, structure or characteristic described in connection with the embodiment is included in at least one embodiment of the present invention. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. Furthermore, while some embodiments described herein include some but not other features included in other embodiments, combinations of features of different embodiments are meant to be within the scope of the invention, and form different embodiments, as would be understood by those in the art. In the description provided herein, numerous specific details are set forth. However, it is understood that embodiments of the invention may be practised without these specific details. In other instances, well-known methods, structures and techniques have not been shown in detail in order not to obscure an understanding of this description.

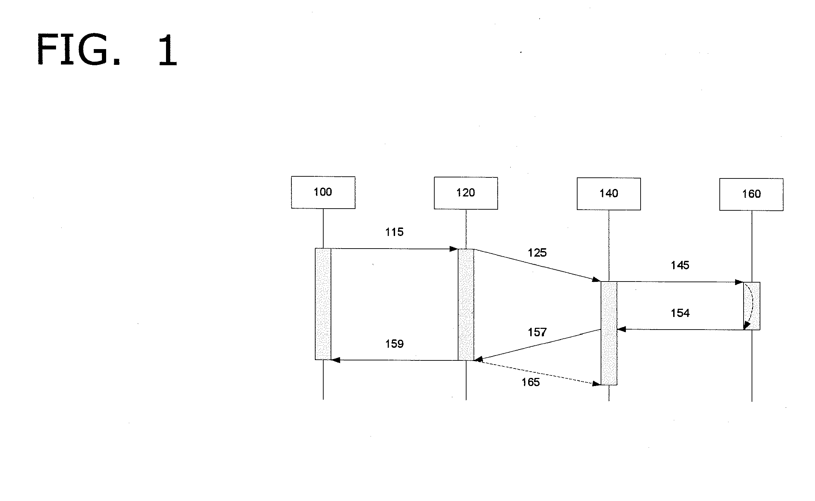

Fig. 1 shows an example of a communication handled by a 3-way handshake in order to establish a certain reliability in order to complete a transaction. In particular obtaining a reliable communication in an unreliable network or a network that restricts the number of retransmissions due to a certain traffic class that is being used during communication implies that each message must be stored in a retransmission buffer until it is acknowledged. In the event that no acknowledging arrives in time the message is retransmitted. The methodology of using retransmitted message may also lead to the case, where duplicated messages are sent in a case, where a message is retransmitted when the acknowledgement was lost. A node receiving message has therefore to be able to filter potentially duplicated messages.

Throughout the description of the drawings in a client context the term client rather than peer or synonymously peer device is used. In a server context the term server is used rather than peer and synonymously peer device.

Fig. 1 shows an application 100, a T/CO client 120, a T/CO server 140 and an application slave 160. A first type of message T_TCO_P1 125 is triggered by a request 115 from the application 100. When this request 125 reaches the server 140 it is delivered to the slave application 160 by a respective request 145. The application slave 160 processes the respective request 145 and returns a corresponding response 154 to the server 140. Such a response may contain a success/failure status and possibly also return some processed data. Subsequently the response is sent to the client 120 by a respective second type of message 157 T_TCO_P2 and the client 120 subsequently delivers the response by a corresponding message 159 to the application 100. At the same time the T/CO client 120 frees its resources by deleting the retransmission buffer for the requests and sends a third type of message 165 T_TCO_P3 to the T/CO server in order to acknowledge the reception of the second type of message. After receiving the third type of message the server 140 frees up its own resources by deleting the retransmission buffer for response and gets into a state where he is able to receive the next transaction.

In order to secure the transaction the client 120 protects a first type of message with a timer which is started at the same time when the first type of message 125 is sent to the server 140. In case no second type of message 157 is received in time the client 120 retransmits the first type of message by reading it from its retransmission buffer and sends it to the server 140. The server also in a similar manner protects the second type of message 157 with a timer which is started when the response is sent to the client 120 and also keeps track of a certain time period from the second type of message 157 to the third type of message 165 which in case no third type of message is received in time triggers a retransmission of the second type of message 157 from the server 140 to the client 120 in which case the server reads the second type of message 157 from its retransmission buffer and sends it again after expiration of the predefined time period.

Due to an unreliability in the network on which the communication is based upon and at the same time memory losses due to e.g., buffer overflow at the components the client 120 and the server 140 have to be able to distinguish between retransmitted and new messages.

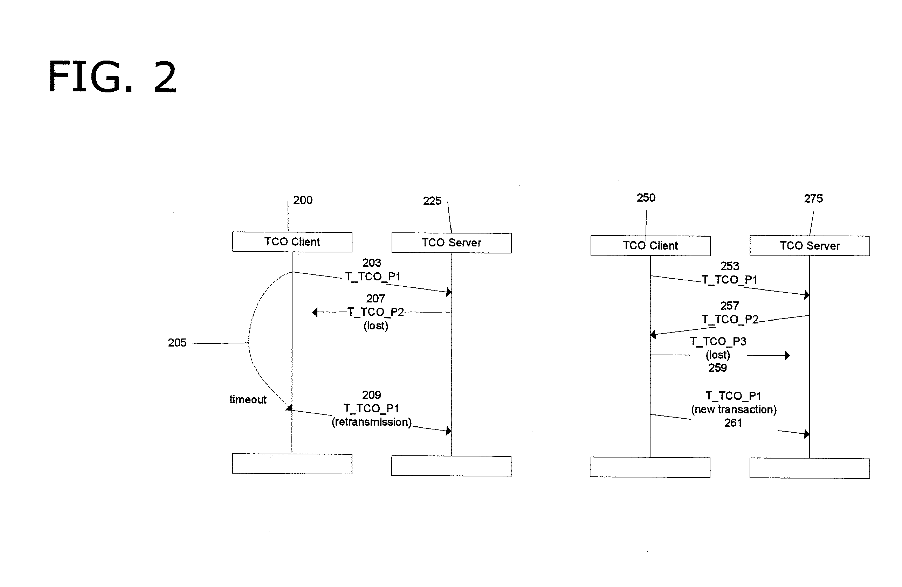

Fig. 2 shows a case, where a discrimination between a retransmitted message and a new message is required. In the example on the left-hand of Fig. 2 a client 200 and a server 225 are indicated. The client 200 sends a first type of message 203 to the server to initiate a transaction. The server responds with a second type of message 207 to provide the response to the client 200. However the response to the client 200 is lost or arrives too late, which triggers a timeout of the associated timer for the first type of message 203 the timeout being indicated by reference sign 205 and thus causes the client to resend the first type of message 209 to the server 225. In this case on the server side 225 without using the concept of sequence numbers it would be impossible to discriminate between a resent old first type of message and a first type of message that is to initiate a new transaction when for instance considering the first type of message 209.

Such a case is indicated on the right-hand side of Fig. 2 showing a client 250 communicating with a server 275. The client sends first type of message 253 to the server 275 which responds to this first type of message by sending a second type of message 257 to the client 250. The client receiving this second type of message acknowledges it by a third type of message 259 that is sent to the server 275. Subsequently, as this transaction has been completed the client 250 initiates another next and new transaction by sending a second first type of message 261 to the server 275. If the third type message is lost, the server will directly receive the first type message 261 initiating the new transaction. Comparing the left-hand side of Fig. 2 and the right-hand side of Fig. 2 and in particular the time at which the first type of message 209 and the first type of message 261 are respectively sent it is easy to understand, that the server side cannot identify if the first type of message is a resent first type of message like message 209 or is a first type of message like message 261 which initiates a new transaction. One way to solve this problem is to use unique identifiers and for instance sequence numbers as shown in brackets in the figure indicated by a hash followed by a number. In this case the first type of message 209 is indicated by T_TCO_P1(#0) whereas the first type of message 261 on the right-hand side is indicated by T_TCO_P1(#1). By use of the sequence number -for message 209 sequence number 0- and -for message 261 sequence number 1- the server 225 respectively 275 is capable of identifying that the message indicated by 209 is one that is resent due to a timeout whereas the first type of message indicated by reference sign 261 is one that is intended to initiate a new transaction identified by the sequence number #1. Consequently this problem can be reliably handled insofar as a single client server relationship is considered.

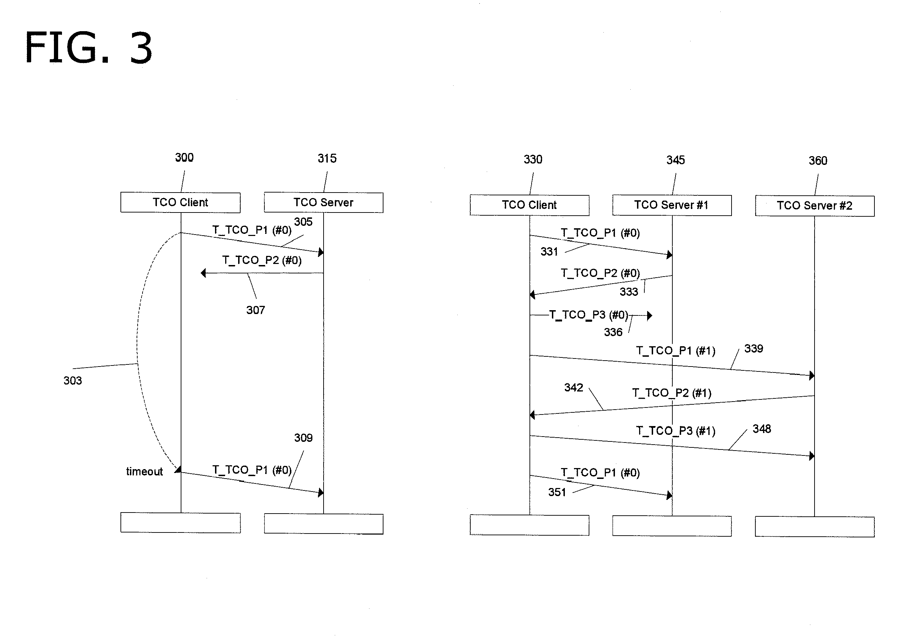

Fig. 3 shows an example, where the use of a single bit sequence number is not enough and may cause a problem due to the existence of a plurality of servers. On the left-hand side of Fig. 3 a client 300 and a server 315 is shown that communicate with each other whereas the client sends to the server 315 a first type of message 305 indicated by the sequence number #0 and the server responds to this first type of message by responding with second type of message 307 having the same sequence number. Due to e.g. a malfunction in the network however the response 307 does not arrive at the client 300 which leads to a timeout 303 and causes a client 300 to resend the first type of message having the sequence number #0 indicated by reference sign 309.

This case is compared to a case on the right-hand side of Fig. 3 where a client 330 communicates with two servers a first server 345 and a second server 360. Starting with the initiation of a transaction related to the first server 345 the client sends a first type of message 331 having the sequence number #0 to the server 345 which responds with a second type of message 333 having the same sequence number followed by an acknowledge 336 from the client 330 sent to the first server 345 also having the sequence number #0. The acknowledge message 336 is lost during transmission and never reaches its destined server 345. Then the client initiates a next transaction with a second server by sending a first type of message 339 having the sequence number #1 to the second server 360 which responds by a second type of message 342 having also the sequence number #1 to the client 330 that acknowledges the receipt of the second type of message 342 by sending to the second server 360 a third type of message 348 also having the sequence number #1.

Subsequently the client then initiates a new transaction by communicating to the first server 345 a next first type of message 351 again having the sequence number #0. Now observing the comparison of the messages 309 on left-hand side of Fig. 3 and 351 on the right-hand side of Fig. 3 it is evident, that the server 315 respectively 345 is not capable to identify, keeping a one bit sequence number in mind, if the message 309, respectively 351 is a first type of message that is sent following up on a timeout in the case of message 351, the second type of message 333 might not have been received due to a network failure, or it is initiating a new transaction.

Using a 3-way handshake protocol such a problem might for instance be solved in two ways:
1. A respective TCO client maintains a single bit sequence number per TCO server. In this manner incrementing the sequence number when initiating transactions with different servers is avoided. However, the problem with such a solution is that it is not scalable as the number of TCO servers must be hardcoded per TCO client.
2. A message maximum lifetime is for instance bounded and the sequence number space is made large enough to guarantee that no new message may be issued as long as a previous message with the same sequence number may still be received. Such an approach is taken by T/TCP. Such a solution however requires a large overhead.

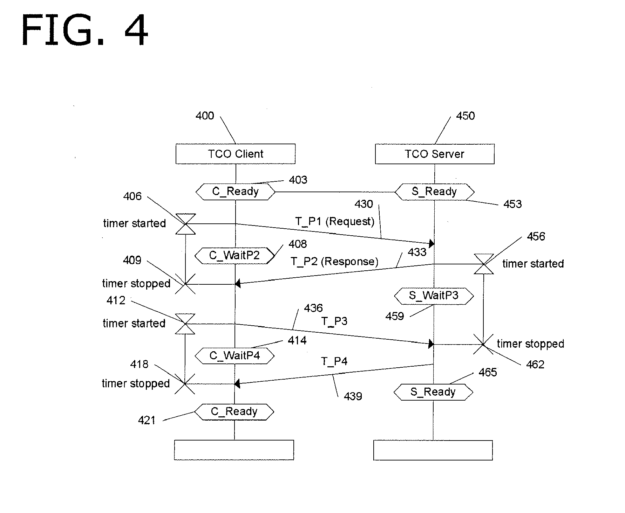

Fig. 4 shows an embodiment of a method according to the present invention. The presented solution requires a low overhead considering an implementation in the unified protocol and thus solves the above described problems by establishing a fourth type of message in communicating the completion of a transaction from the server. As Fig. 4 shows a client 400 communicates with a server 450. The client is in a ready state 403 and the server is in a ready state 453. Starting a timer at 406 a first type of message 430 is sent to the server 450 which responds by starting a timer 456 and sending a second type of message 433 to the client 400 which stops the client timer at 409 while he is in a wait state 408. In order to acknowledge the receipt of the message 433 from the server the client sends a third type of message 436 starting a timer 412 that meets the server 450 in a wait state 459. Receiving the message 436 the server 450 stops the timer at 462 and acknowledges the receipt of the message 436 by sending a second acknowledge 439 as a fourth type of message to the client 400 which when receiving this message 439 stops the timer at 418 and transits to a ready state at 421. The server transits to a server ready state 465 when he has sent the fourth type of message as this completes the transaction.

The above problems of the 3-way handshake are avoided by this method in that the client 400 is forced not to issue new transactions until it is verified that the peer server has finished its own transaction which is communicated by the fourth type of message, corresponding to a second acknowledge. In this manner the problem of having at the server 450 potentially overlapping open transaction from the same client can be avoided.

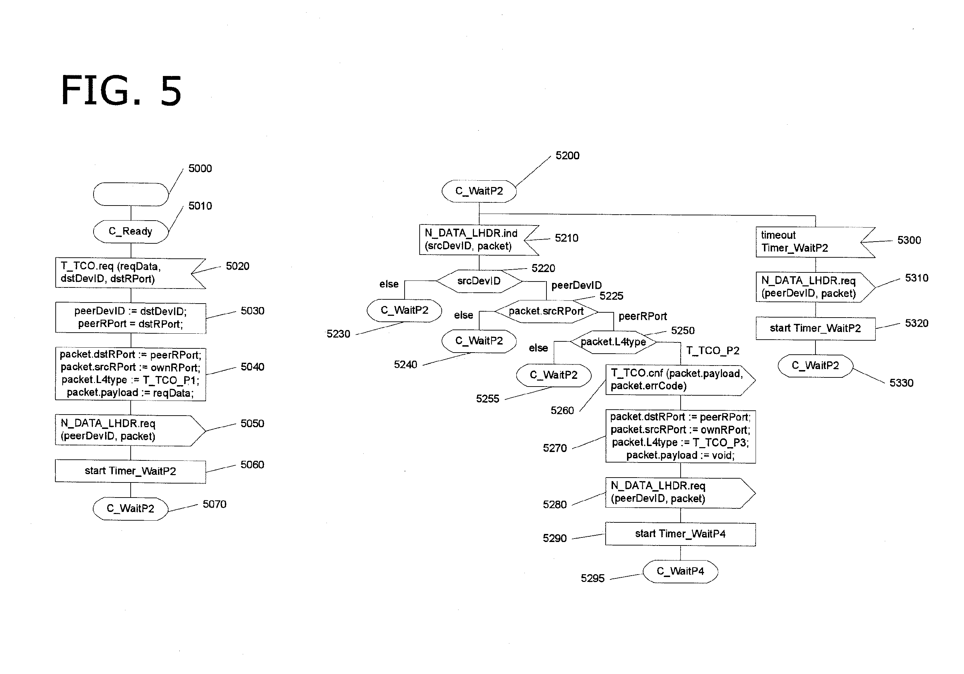

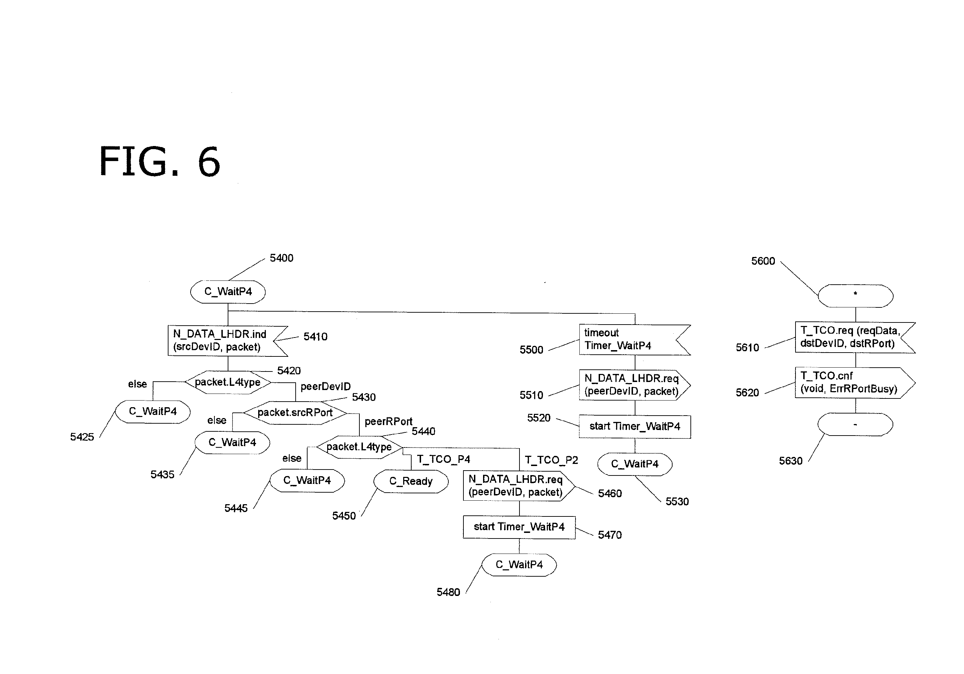

Fig. 5 and Fig. 6 in more detail explain the various options for operations on the client side by showing an embodiment of the client and explaining its corresponding states by way of a state machine. After an initialization 5000 the client is in a ready state C_Ready 5010. In this state for instance following event may occur: It may receive a request from the application (T_TCO.req) 5020 to send data in form of reqData to a destination specified by a device ID in form of dstDevID and RPORT in form of dstRPort. The client safes the peer entity in its peerDevID and peerRPort, and then proceeds to build and send a T_TCO_P1 packet as a first type of message at 5040 and 5050, respectively. As soon as the packet is sent a timer Timer_WaitP2 is started at 5060 and the client moves to the C_WaitP2 state at 5070.

Receiving a T_TCO.req in a state other than C_Ready marked by 5010 it is for instance discarded and acknowledged by a T_TCO.cnf indicating an error that the RPORT is busy with another transaction as indicated by 5610 and 5620.

In the C_WaitP2 state 5200 two events may occur:
1. A packet from layer 3 via N_DATA_LHDR.ind may be received as indicated by 5210. If the packet is not received from the saved peer device ID and RPORT, the packet is discarded at 5230 and 5240, respectively, or if the received packet is not a T_TCO_P2 packet returns to the C_WaitP2 state at 5255. If a T_TCO_P2 packet in form of a second type of message is received from the peer device, the packet payload and error code are indicated to the application using T_TCO.cnf at 5260 and next at 5270 the third type of message T_TCO_P3 packet is created and sent at 5280 and the TCO client moves to the C_WaitP4 state at 5295.

As an alternative to indicating the packet payload and error code directly using T_TCO.cnf the packet payload and error code can be saved and indicated to the application after T_TCO_P4 as fourth type of message is received. Such a procedure could simplify the application slightly, however may introduce a delay in returning the response to the application.
2. The client may receive an indication that the timer TIMER_WAITP2 expired at 5300. In such a case, the T_TCO_P1 packet, read first type of message, is retransmitted at 5310 and the timer TIMER_WAITP2 is restarted at 5320. In this case the TCO client remains in the C_WaitP2 state at 5330.
3. A T_TCO.req from the application may be received as previously mentioned, this request is discarded and acknowledged by a T_TCO.cnf indicating an error that the RPORT is busy with another transaction. In this case in the C_WaitP2 state, detecting any other event than N_DATA_LHDR.ind, TIMER_WAITP2 timeout, or T_TCO.req is considered to be an error and should be discarded without processing.

In the C_WaitP4 state as indicated at 5295 and 5400 two main events may occur for instance:
1. A packet may be received from layer 3 via N_DATA_LHDR.ind at 5410. If the packet is not received from the saved peer device ID and RPORT the packet is discarded and the TCO client, or if the received packet is not a T_TCO_P4 respectively fourth type of message or T_TCO_P2 packet respectively second type of message returns to the C_WaitP4 state at respectively 5425, 5435 or 5445. If however a fourth type of message is received from the peer device in form of a T_TCO_P4 packet a TCO client returns to the C_Ready state at 5450. If a second type of message is received by receiving a T_TCO_P2 packet that is received from the peer, the TCO client retransmits at 5460 the third type of message in sending a T_TCO_P3 packet, and restarts the timer Timer_WaitP4 at 5470 and returns to the C_WaitP4 state at 5480.
2. An indication may be received at 5500 that the timer Timer_WaitP4 has expired. In this case a third type of message in form of a T_TCO_P3 packet is retransmitted at 5510 and the timer Timer_WaitP4 is restarted at 5520 while the TCO client remains in the C_WaitP4 state at 5530.
3. In case a T_TCO.req is received from the application this request is discarded and acknowledged by a T_TCO.cnf indicating an error that the RPORT is busy with another transaction. Detecting in the C_WaitP4 state any other event than N_DATA_LHDR.ind, Timer_WaitP4 timeout, or T_TCO.req is e.g. considered as an error and should be discarded without any further processing.

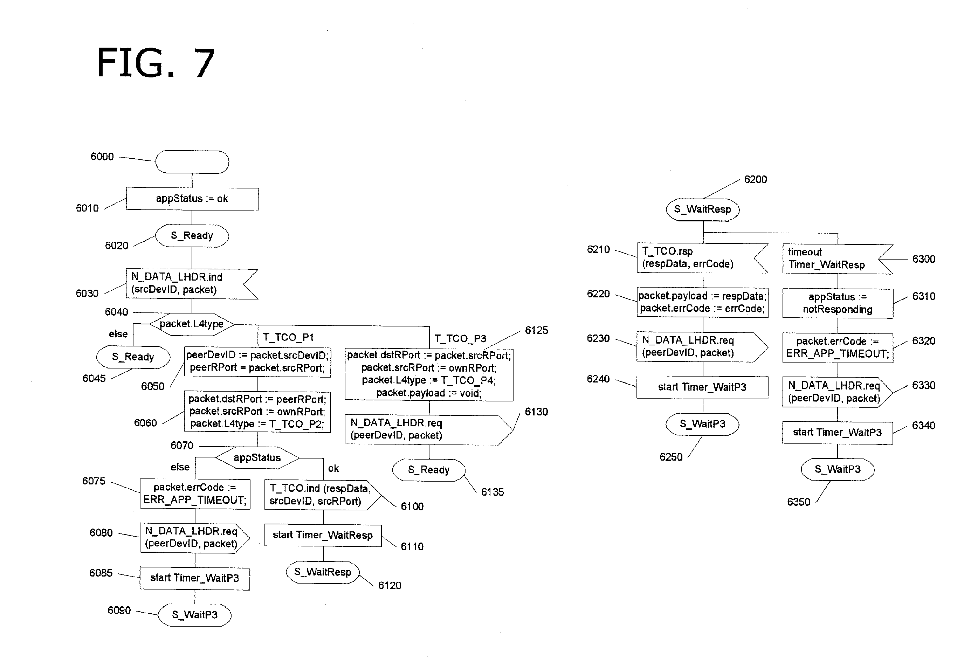

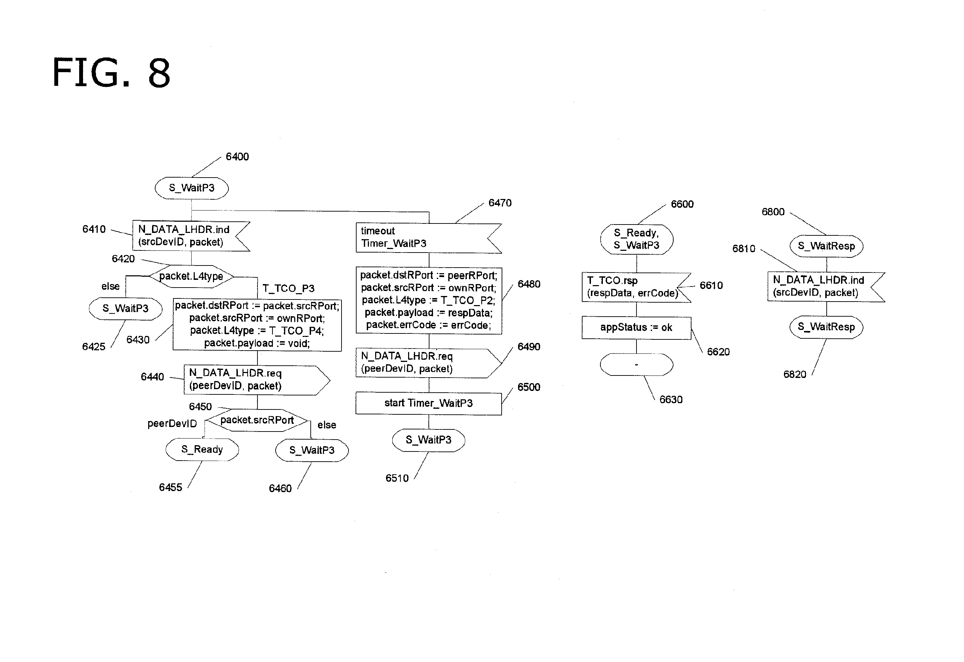

The chart in Fig. 7 and Fig. 8 shows an example of a method that is performed by a server according to an embodiment of the present invention and depicts the corresponding state machine. Starting at 6000 the application status is set to OK at 6010 and the server goes to an S_Ready state at 6020. There it may receive a packet from layer 3 by N_DATA_LHDR.ind at 6030 and based on a discrimination of the packet at 6040 may either transit into the S_Ready state at 6045 or in case it is about a first type of message which is identified by a T_TCO_P1 packet at 6050 a new transaction is started. Thereby the peer device is stored in peerDevID and peer RPORT is stored in peerRPort at 6050, and the T_TCO_P2 packet is prepared at 6060 to send a response as a second type of message which can also be done in the S_WaitResp state. In case the application is known to be alive and consequently interpreted as OK at 6070, the packet payload is indicated to the application by using T_TCO.ind at 6100. Then the timer Timer_WaitResp is started to protect against a loss of the response of the application at 6110 and the TCO server moves to the S_WaitResp state at 6120. In case the application sends no response to a previous transaction which is identified at 6070 when the application status is not OK at 6075 an error packet in form of a second type of message using T_TCO_P2 packet is sent back at 6080 and the timer Timer_WaitP3 is started at 6085 to protect against the loss of the T_TCO_P3 which causes the TCO server to move directly to S_WaitP3 at 6090. In case the received packet is a T_TCO_P3 packet indicating a third type of message this packet is a resent packet, which needs to be responded by an acknowledging T_TCO_P4 packet which corresponds to a fourth type of message at 6125 and 6130. Subsequently the server stays in the S_Ready state at 6135.

In case a late response from the application is received by T_TCO.rsp at 6610 only the application status is set to OK at 6620 and no response packet is sent while the server stays in the same state (S_Ready and S_WaitP3, respectively) at 6630.

In the S_WaitResp state 6200 following events may occur for instance:
1. A response from the application may be received in form of T_TCO.rsp, which leads at 6210 to copying the data and error code for sending a T_TCO_P2 packet as a second type of message to the peer at 6230 causing the Timer_WaitP3 to be started at 6240 and moving the server to the state of S_WaitP3 at 6250.
2. An indication may be received that the timer Timer_WaitResp has expired at 6300 which in this case is considered to be the application not responding at 6310 causing a second type of message in form of a T_TCO_P2 packet with an error to be created and sent to the peer at 6320 and 6330, starting the Timer_WaitP3 at 6340, and moving the server in the S_WaitP3 state at 6350.
3. In the S_WaitResp state 6200 and 6800, receiving a packet from layer 3 via N_DATA_LHDR.ind at 6810 is for instance ignored and the server stays in the S_WaitResp state at 6820. In the S_WaitResp state when for instance any input other than T_TCO.rsp, Timer_WaitResp indication, or N_DATA_LHDR.ind is received this for instance is considered as an error and should be discarded without any further processing.

In the S_WaitP3 state indicated by 6400 following events for instance may occur:
1. A packet from layer 3 via N_DATA_LHDR.ind may be received at 6410 and if the packet is a third type of message indicated by a T_TCO_P3 packet from the peer which is identified at 6430 the transaction finishes and a TCO server returns to the S_Ready state at 6455. In case the received packet is not from the peer, the packet is ignored and the TCO server stays in the S_WaitP3 state at 6460. In case the received packet is not a T_TCO_P3 packet, a third type of message, the packet is ignored and the TCO server stays in the S_WaitP3 state at 6425.
2. An indication may be received that the timer Timer_WaitP3 has expired at 6470. In this case the T_TCO_P2 packet to transmit a second type of message is resent at 6490 and the timer Timer_WaitP3 is restarted at 6500 whereas the TCO server stays in the S_WaitP3 state at 6510.
3. In case a late response from the application is received by T_TCO.rsp the only action is resetting the APP status to OK. No packet is sent and the TCO server stays in the S_WaitP3 state. In the S_WaitP3 state, waiting for a third type of message, if any other input than N_DATA_LHDR.ind, Timer_WaitP3 indication, or T_TCO.rsp is received this is considered to constitute an error and should be discarded without any further processing.

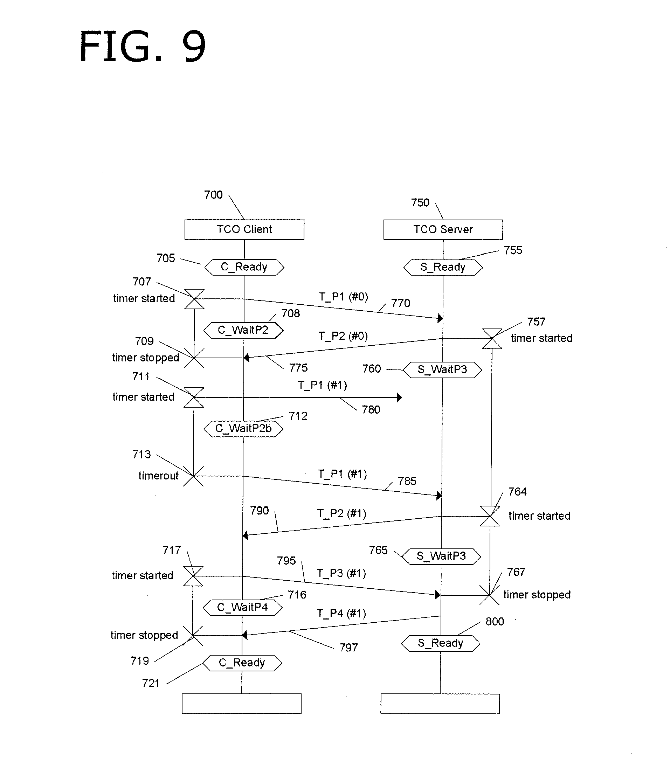

Fig. 9 shows a way how to optimize the method for performing a transaction according to a further embodiment of the present invention. This optimization may be realized by allowing the TCO client to perform back-to-back transaction by replacing the third type of message which is confirmed by a T_TCO_P3 packet of the first transaction (sequence number #0) with the T_TCO_P1 packet of the first type of message of the next transaction having the sequence number #1 and by this procedure skipping the T_TCO_P3 and T_TCO_P4 messages corresponding to the third and the fourth type of message as shown in Fig. 9.

In this manner two or more transactions may be sent with only using the first and second type of messages for the first transaction while all four messages first to fourth type of messages are sent for the last transaction in the transaction chain. In this case for instance however care should be taken, that a chained transaction may only take place between the same client and server. If for instance there is a new request for the same server available by the time that the client received a second type of message instead of responding with a third type of message it responds with the first type of message of the next transaction. In turn the server accepts the new first type of message only if it comes from its peer client. At the same time the server also has to be able to distinguish between a new first type of message and a first type of message that is resent which is performed on the basis of a sequence number. Such a retransmission can happen in case a second type of message which corresponds to the first type of message is lost. Thus by performing chained transactions it is for instance evident and important to carry a one bit sequence number and to keep track of it. In case the received first type of message has the same sequence number as the old transaction the server resends the old second type of message belonging to the previous transaction and in case the received first type of message has a subsequent sequence number it can be identified by the server that a new transaction has to be initiated which causes the delivery of the response to the application.

However, as in the case of the non-optimized method of communication the client is only permitted to start a new transaction in case if it is in the C_Ready state corresponding to the reception of a fourth type of message for the previous transaction.

A single exception can be made, for consecutive transactions which are issued to the same server in which case the third type and fourth type of messages may be skipped. Fig. 9 gives an example of this optimized method for performing a transaction showing a client 700 and a server 750. Initially both are in a ready state the client at 705 and the server at 755. The client starts initiating a transaction by sending a first type of message 770 having a sequence number #0 to the server 750 causing a timer to be started at 707 while the client transits to a C_WaitP2 state at 708 expecting a response from the server which is sent as a second type of message indicated by reference sign 775 going along with starting of a timer at 757 on the server 750 side causing the server to transit to an S_WaitP3 state 760 waiting for an acknowledge from the client which the client issues after having received the second type of message 775 causing the timer to be stopped at 709 and subsequently sending instead of an acknowledge by a third type of message due to the fact that the same client 700 and the same server are communicating a next first type of message indicated by a sequence number #1 indicated by reference sign 780 which allows the server 750 to discriminate between a first type of message which is intended to start a new transaction and a retransmission of the first type of message 770.

Consequently to protect for a loss of the first type of message with the sequence number #1 a timer is started at 711 and the client transits to an intermediate state C_WaitP2b at 712 waiting for a response from the server 750. This response however here does not arrive in time causing the client to resend the first type of message having the sequence number #1 marked by reference sign 785 after the timer has expired at 713 which when received by the server, restarts a timer at 764 and is responded with a second type of message marked by reference sign 790 having the sequence number #1 that after having been received by the client 700 causes an acknowledgement to be sent in form of a third type of message having the sequence number #1 indicated by reference sign 795 and starting a timer at 717 transiting at the same time to a wait state waiting for a fourth type of message at 716 while the server is waiting at 765 for a third type of message which when received causes the timer to be stopped at 767 and triggering the server to send a fourth type of message in form of a second acknowledge message marked by reference sign 797 thus completing the transaction on the server side and allowing the server to transit to the S_Ready state at 800. When the client 700 receives the fourth type of message the timer is stopped at 719 and now the client also knows it may start with a new transaction and transit to a C_Ready state at 721 while at this time it may also start a new transaction with a different server and not with the server 750.

The method of the present invention that has been described above has the significant advantage that it requires a low communication overhead does not need to carry a large sequence number, even in the case where the network providing the communication service is unreliable and/or if the applications are slow and this without putting constraints on the segment lifetime. Although the method is optimized for the unified protocol network protocol it may be used in any type of network available.

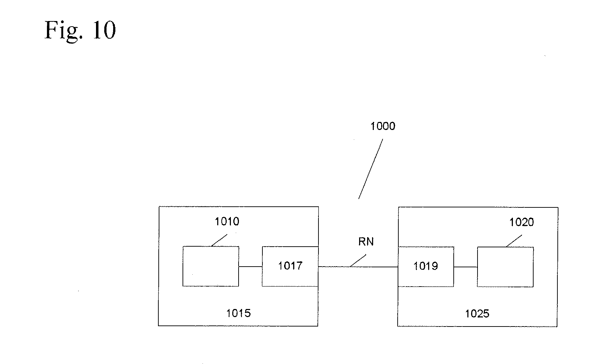

Fig. 10 shows an example of a system 1000 according to an embodiment of the present invention which represents for instance a minimum configuration of the system. It may be represented by a first component 1010 such as an application processor and a second component 1020 such as a peripheral device, which are connected by a reliable or unreliable network RN via a respective network interface 1017, 1019 for instance, a serial interconnect such as the UniPro^{SM}. This network may be an interconnect between electronic components on a circuit board or in the mobile device and as such component 1010 may be a microprocessor and component 1020 may be a microcontroller or another active device.

As indicated above the present invention may be implemented as hardware in form of circuits. On the other hand some parts can be implemented in software written in any computer language run on conventional processing hardware such as general purpose microprocessors or for instance application specific integrated circuits. Embodiments thereof may be implemented as hardware, computer software or combinations of both. Here the network RN may for instance restrict the number of retransmissions.

## Claims

1. Method for performing a transaction;
- where a client (400) sends to a server (450) a first type of message (430);
- where the server (450) in case of being able to handle the first type of message sends to the client (450) a second type of message (433) and at least maintains an originator of the first type of message (430);
- where the client (400) when receiving the second type of message sends to the server (450) a third type of message (436); and
- where the server (450) receiving the third type of message (436) releases the originator and sends to the client (400) a fourth type of message (439), whereby a performed transaction is completed.

2. Method according to claim 1, wherein
if the client (400) does not receive the second type of message within a predefined time period (5300) the client (400) resends the first type of message (5310).

3. Method according to any of the previous claims, wherein the client (400) starts a timer (406) to measure the predefined time period.

4. Method according to claim 3, wherein the timer (406) is started each time a first type of message is sent, and/or
wherein the timer is stopped (409, 418) each time a second type of message is received.

5. Method according to any of the previous claims, where in case the server (450) receives a second first type of message (430) while maintaining the originator, the second first type of message is discarded.

6. Method according to any of the previous claims, wherein the client (700) sends at least a first (780) and a second (785) first type of message in sequence respectively marked by a first and a second unique identifier.

7. Method according to claim 6,
wherein the client (400) only sends a second first type of message after the fourth type of message (439) regarding the first type of message (430) marked by the first unique identifier has been received

8. Method according to claim 6 or 7, wherein the first and second unique identifier are a sequence number counting the number of messages.

9. Method according to claim 8 in combination with claim 6, wherein if the server (750) receives a second first type of message (785) marked with a different unique identifier than the one of the previously received first type of message (770) from the same client (700) instead of the third type of message (795), the server (750) sends to the client (700) a second type of message (790) marked with the different unique identifier.

10. Method according to any of the previous claims, wherein the first type of message is a request, and/or the second type of message is a response and/or the third type of message is an acknowledge and/or the fourth type of message is a second acknowledge.

11. Method according to any of the previous claims, wherein the messages are transmitted according to the Unified Protocol.

12. Method according to claim any of the previous claims, wherein the first type message carries user data and/or
wherein the second type message carries user data.

13. System for performing a transaction,
- having a first (1017) and a second component (1019) connected by a network with in-order data delivery (RN) wherein the first component (1017) is adapted as a client to implement a method according to any of the claims 1 to 12;
- and the second component (1019) is adapted as a server to implement a method according to any of the claims 1 to 12.

14. System (1000) according to claim 13, wherein the first (1017) and/or the second component (1019) is a microprocessor and/or the network (RN) has a restricted number of retransmissions.

15. System (1000) according to any of the claims 13 or 14 that is implemented in a mobile device.
